# EUROPÄISCHE PATENTSCHRIFT

(11) **EP 0 697 516 B1**
(45) Veröffentlichungstag und Bekanntmachung des Hinweises auf die Patenterteilung: **23.09.1998**
(21) Anmeldenummer: 95112733.1
(22) Anmeldetag: 12.08.1995
(51) Int. Cl.: F02M 25/08, F02M 25/07

(54) **Dieselbrennkraftmaschine mit einer Einrichtung zur Zugabe von Abgasen zur Verbrennungsluft**
Diesel combustion engine with exhaust gas suppletion device for the car combustion air
Moteur à combustion interne à diesel avec dispositif d'addition de gaz d'échappement à l'air de combustion

(30) Priorität: 20.08.1994 DE 4429674
(43) Veröffentlichungstag der Anmeldung: 21.02.1996
(73) Patentinhaber: MTU Motoren- und Turbinen-Union Friedrichshafen GmbH, 88045 Friedrichshafen (DE)
(72) Erfinder: Bächle, Bernhard, Dipl.-Ing., D-88045 Friedrichshafen (DE); Freitag, Martin, Dr.-Ing., D-88048 Friedrichshafen (DE)

(56) Entgegenhaltungen:
- DE-A- 2 443 897
- US-A- 4 212 163
- US-A- 4 610 141
- US-A- 5 207 734

## Beschreibung

Zur Verringerung der Schadstoffe, insbesondere der Stickoxide im Abgas von Dieselbrennkraftmaschinen, ist es bekannt, eine Einrichtung zur Abgasrückführung vorzusehen. Die Reduktion des Stickoxidanteils im Abgas ist eine Folge der bei Abgasrückführung erhöhten CO₂-Anteile in der den Brennräumen zugeführten Verbrennungsluft. Damit bei aufgeladenen Brennkraftmaschinen der Wirkungsgrad der Abgasturbolader bzw. die Motorleistung nicht absinkt, ist es notwendig, das rückgeführte Abgas zu kühlen. Dieselkraftstoff enthält Schwefel. Bei der Verbrennung des Schwefel enthaltenden Dieselkraftstoffs entsteht Schwefelsäure und schweflige Säure. Diese Säuren führen zu erheblichen Korrossionsproblemen insbesondere bei der Abgaskühlung in Wärmetauschern sowie an den mit kaltem Abgas (< 140° C) in Berührung kommenden Bauteilen.

Eine Einrichtung zur Abgasrückführung geht beispielsweise aus der nicht vorveröffentlichten deutschen Patentanmeldung mit der Aktennummer P 44 14 830.5 als bekannt hervor. Bei dieser Einrichtung dient einer der Zylinder der Dieselbrennkraftmaschine zur Erzeugung des Abgases, das über eine Abgasrückführleitung in die Ansaugleitung zurückgeführt wird. Der Zylinder kann anders als die übrigen Zylinder Abgas liefern, das sich aufgrund seiner Zusammensetzung besonders für die Abgasrückführung eignet.
Aus der DE 42 41 274 C1 geht es als bekannt hervor, eine Vorrichtung zum Einspeisen der im Freiraum eines Kraftstoffbehälters befindlichen Kraftstoffdämpfe in das Ansaugrohr einer Verbrennungskraftmaschine vorzusehen. Mit dieser Einrichtung soll verhindert werden, daß Kraftstoffdämpfe in die Umgebung gelangen.

Der im Patentanspruch 1 angegebenen Erfindung liegt das Problem zugrunde, Abgas für die Zugabe zur Verbrennungsluft zu erzeugen, das die Funktionsfähigkeit der mit dem Abgas in Berührung kommenden Vorrichtungen und Leitungen erhält.

Dieses Problem wird durch die im Patentanspruch 1 aufgeführten Merkmale gelöst. Es wird schwefelfreies Abgas durch Verbrennung von Kraftstoffdampf aus Dieselkraftstoff in einem besonderen Brenner erzeugt und die aus dem Brenner abströmenden Abgase der der Brennkraftmaschine zuströmenden Verbrennungsluft zugemischt. Der für die Verbrennung im Brenner benötigte Kraftstoffdampf wird zweckmäßigerweise aus den sich im Freiraum des Kraftstoffbehälters der Brennkraftmaschine ansammelnden Dämpfen entnommen. Da der Kraftstoffdampf aus leicht flüchtigen Bestandteilen des Dieselkraftstoffs besteht, bestehen die Brennerabgase aus schwefelsäurefreiem Abgas. Dieses säurefreie Abgas beeinträchtigt die Funktionsfähigkeit der damit in Berührung kommenden Bauteile nicht, das heißt, daß Korrossionsprobleme bei der Abgaskühlung in einem Wärmetauscher sowie an den mit kaltem Abgas in Berührung kommenden Bauteilen vermieden werden. Der Kraftstoffdampf läßt sich ferner partikelfrei verbrennen, so daß auch keine Beeinträchtigung der Funktionsfähigkeit der abgasbestrichenen Bauteile durch Rußpartikel gegeben ist. Zur Unterstützung der Dampfentwicklung im Kraftstoffbehälter kann der Kraftstoffbehälter beheizt werden. Besonders vorteilhaft ist noch, wenn die Abgasenergie des aus dem Brenner abströmenden Abgases in einer Nutzturbine in Wellenarbeit umgesetzt wird und durch ein Getriebe dem Abtriebsstrang zugeführt wird, bevor die Zumischung der Brennerabgase zum Frischluftstrom erfolgt. Die Brennerabgase werden zweckmäßigerweise in einem der Nutzturbine nachgeordneten Wärmetauscher gekühlt.

Ein Ausführungsbeispiel der Erfindung ist in der Zeichnung dargestellt und wird im folgenden näher erläutert; es zeigt die einzige Figur eine schematische Darstellung einer Anlage zur Erzeugung schwefel- und partikelfreien Abgases.

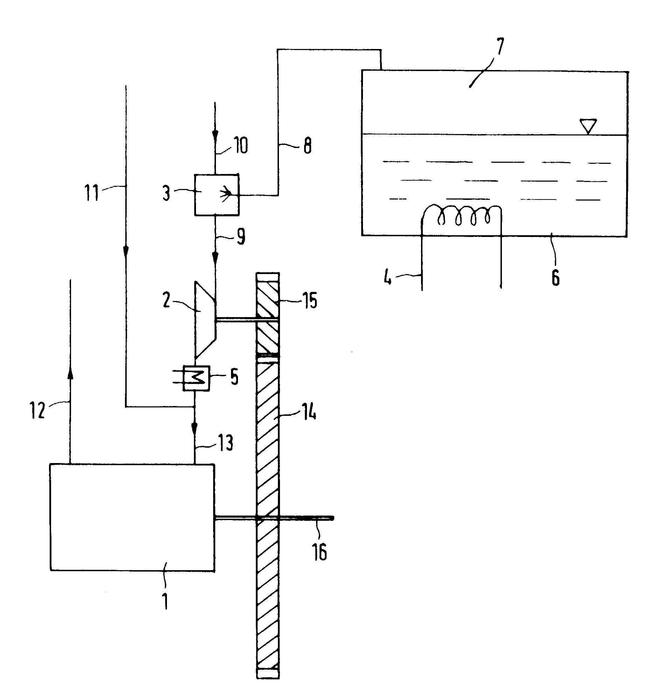

Der Dieselmotor 1 der Anlage nach Figur 1 ist mit einem Kraftstoffbehälter 6 ausgestattet, in dem sich flüssiger Dieselkraftstoff befindet. Im Freiraum 7 des Kraftstoffbehälters 6 sammelt sich durch Verdampfung leicht flüchtiger Bestandteile Kraftstoffdampf an. Der Kraftstoffbehälter 6 kann mit einer Heizung 4 ausgestattet sein, um die Kraftstoffdampfentwicklung im Kraftstoffbehälter 6 zu unterstützen. Die Heizenergie kann aus den von der Brennkraftmaschine abströmenden Abgasen gewonnen werden. Der Kraftstoffdampf wird über eine Leitung 8 einem Brenner 3 zugeführt, in dem er verbrannt wird. Die nötige Verbrennungsluft wird über eine Leitung 10 aus der Umgebung entnommen. Die Verbrennung erfolgt so, daß möglichst wenig Stickoxide und Partikel entstehen. Die aus dein Brenner abströmenden Abgase werden über eine Leitung 9 einer Nutzturbine 2 zugeführt, in der sie entspannt werden. Die aus der Abgasenergie gewonnene Leistung wird über ein aus Zahnrädern 14 und 15 bestehendes Getriebe einer Welle 16 des Abtriebstrangs der Brennkraftmaschine 1 zugeführt. So kann die Abgasenergie des vom Brenner abströmenden Gasstroms vorteilhafterweise in Wellenarbeit umgesetzt werden. Das aus der Nutzturbine 2 abströmende Abgas wird in einem Wärmetauscher 5 gekühlt und gelangt über die Leitung 13 gemeinsam mit der über die Leitung 11 zuströmenden Frischluft in die Brennräume der Brennkraftmaschine 1. Das mit dem Abgas der Verbrennungsluft zugegebene CO₂ reduziert die Stickoxidbildung. Die aus der Brennkraftmaschine 1 über die Leitung 12 abströmenden Abgase werden nicht zur Abgasrückführung verwendet.

Dieselkraftstoff enthält etwa 0,05 % Schwefel. Bei den im Kraftstoffdampf befindlichen leicht flüchtigen Bestandteilen des Dieselkraftstoffs befindet sich kein Schwefel. Durch die Verbrennung dieser Bestandteile steht ein schwefelsäurefreies Abgas zur Verfügung. Dieses Abgas läßt keinerlei Korrossionsprobleme am Wärmetauscher und an den Leitungen entstehen, die mit dem Abgas in Berührung kommen, weil es insbesondere bei Abkühlung nicht zur Auskondensation von Schwefelsäure oder schwefliger Säure kommen kann. Da sich der Kraftstoffdampf in einem geeignet eingestellten Brenner partikelfrei verbrennen läßt, ist auch keine Beeinträchtigung der Funktionsfähigkeit der abgasbestrichenen Bauteile durch Partikel gegeben, die beispielsweise zu Belagbildung führen können. Der Brenner ist beispielsweise vergleichbar einer Brennkammer bei einer Gasturbine aufgebaut, mit einer Zündeinrichtung und kontinuierlicher Verbrennung des Luft-Kraftstoffdampfgemisches.

Zur Kraftstoffdampferzeugung kann auch ein spezieller Verdampfer für Dieselkraftstoff vorgesehen sein, der mit dem Brenner zur Zulieferung von Kraftstoffdampf in Verbindung steht.

## Patentansprüche

1. Dieselbrennkraftmaschine mit einer Einrichtung zur Zugabe von durch die Verbrennung von Dieselkraftstoff erzeugten Abgasen zu der den Brennräumen der Dieselbrennkraftmaschine zugeführten Verbrennungsluft, dadurch gekennzeichnet, daß die der Verbrennungsluft zuzugebenden Abgase in einem Brenner (3) durch Verbrennung voll Kraftstoffdampf aus Dieselkraftstoff erzeugt werden, und daß der Brenner (3) mit einer Einrichtung zur Erzeugung und Zuführung von Kraftstoffdampf aus Dieselkraftstoff verbunden ist.

2. Brennkraftmaschine nach Anspruch 1, dadurch gekennzeichnet, daß der Kraftstoffdampf für die Verbrennung im Brenner (3) aus den im Freiraum (7) eines Kraftstoffbehälters (6) befindlichen Dämpfen entnommen wird.

3. Brennkraftmaschine nach Anspruch 2, dadurch gekennzeichnet, daß der Kraftstoffbehälter (6) beheizbar ist.

4. Brennkraftmaschine nach einem der Ansprüche 1 bis 3, dadurch gekennzeichnet, daß der aus dem Brenner (3) abströmende Abgasstrom vor der Zugabe zur Verbrennungsluft in einem Wärmetauscher (5) gekühlt wird.

5. Brennkraftmaschine nach einem der Ansprüche 1 bis 4, dadurch gekennzeichnet, daß die vom Brenner (3) abströmenden Abgase vor der Zugabe zur Verbrennungsluft einer Nutzturbine (2) zugeführt werden.

6. Einrichtung nach Anspruch 4, dadurch gekennzeichnet, daß der Wärmetauscher (5) stromab von der Nutzturbine (3) angeordnet ist.

## Claims

1. Diesel internal-combustion engine having an arrangement for adding exhaust gases produced by combustion of diesel fuel to the combustion air fed to the combustion spaces of the diesel internal-combustion engine, characterized in that the exhaust gases to be added to the combustion air are produced in a burner (3) by combustion of fuel vapour from diesel fuel, and in that the burner (3) is connected to an arrangement for producing and feeding fuel vapour from diesel fuel.

2. Internal-combustion engine according to Claim 1, characterized in that the fuel vapour for the combustion in the burner (3) is extracted from the vapours located in the free space (7) of a fuel tank (6).

3. Internal-combustion engine according to Claim 2, characterized in that the fuel tank (6) can be heated.

4. Internal-combustion engine according to one of Claims 1 to 3, characterized in that the exhaust-gas stream flowing off from the burner (3) is cooled in a heat exchanger (5) before being added to the combustion air.

5. Internal-combustion engine according to one of Claims 1 to 4, characterized in that the exhaust gases flowing off from the burner (3) are fed to a power turbine (2) before being added to the combustion air.

6. Arrangement according to Claim 4, characterized in that the heat exchanger (5) is arranged downstream of the power turbine (3).

## Revendications

1. Moteur à combustion interne à diesel avec un dispositif d'addition des gaz d'échappement produits par la combustion de carburant diesel à l'air de combustion acheminé aux chambres de combustion du moteur à combustion interne à diesel, caractérisé en ce que les gaz d'échappement à ajouter à l'air de combustion sont produits dans un brûleur (3) par combustion de vapeur de carburant en provenance du carburant diesel, et que le brûleur (3) est relié à un dispositif destiné à la production et à l'apport de vapeur de carburant à partir du carburant diesel.

2. Moteur à combustion interne selon la revendication 1, caractérisé en ce que la vapeur de carburant pour la combustion dans le brûleur (3) est prélevée des vapeurs se trouvant dans l'espace libre (7) d'un réservoir de carburant (6).

3. Moteur à combustion interne selon la revendication 2, caractérisé en ce que le réservoir de carburant (6) peut être chauffé.

4. Moteur à combustion interne selon l'une quelconque des revendications 1 à 3, caractérisé en ce que le courant de gaz d'échappement se dégageant du brûleur (3) est refroidi dans un échangeur thermique (5) avant l'addition à l'air de combustion.

5. Moteur à combustion interne selon l'une quelconque des revendications 1 à 4, caractérisé en ce que les gaz d'échappement se dégageant du brûleur (3) sont acheminés avant l'addition à l'air de combustion d'une turbine d'exploitation (2).

6. Dispositif selon la revendication 4, caractérisé en ce que l'échangeur thermique (5) est disposé en aval de la turbine d'exploitation (3).
